Europäisches Patentamt

European Patent Office

Office européen des brevets

(11) Publication number: **0 284 688**
**A1**

## EUROPEAN PATENT APPLICATION

(21) Application number: 87309905.5

(51) Int. Cl.⁴: **B64G 9/00**

(22) Date of filing: 09.11.87

(30) Priority: 07.11.86 GB 8626669
16.07.87 GB 8716740

(43) Date of publication of application:
05.10.88 Bulletin 88/40

(84) Designated Contracting States:
DE FR GB IT NL

(71) Applicant: **BRITISH AEROSPACE PUBLIC
LIMITED COMPANY
11 Strand
London WC2N 5JT(GB)**

(72) Inventor: **Cardwell, John Francis British
Aerospace PLC
Space and Communications Division PO Box
5
Filton Bristol BS12 7QW(GB)**

(74) Representative: **Dowler, Edward Charles et al
British Aerospace Public Limited Company
Corporate Patents Department Brooklands
Road
Weybridge Surrey, KT13 OSJ(GB)**

(54) Deployable frame structure.

(57) A deployable frame structure comprising a series of polygonal frames made up of hinged together elongate elements. To make the frames deploy sequentially, instead of all moving together as in a lazy-tongs structure which is disadvantageous, the frames are coupled one to another by coupling means which constrains the deployment of each to be a proportion of the deployment of the next. The coupling means can comprise flexible elongate elements, eg. cables, which link the length of one frame to the width of the next adjacent frame.

*Fig.5.*

## DEPLOYABLE FRAME STRUCTURE

This invention relates to a deployable frame structure comprising a series of interconnected polygonal frames each made up of a plurality of hinged together elongate members for the frame to be deployable from an initial stowed configuration to an extended configuration. To each frame may be added further elongate members, for example telescopic members, or members which retain the same lengths but are connected to the frames by sliding joints, which further members rigidise the frames when they are in the extended configuration, ie. to configure them as truss sections.

Deployable truss structures based on the 'lazy-tongs' principle have been proposed for uses such as the deployment and support of solar array panels on spacecraft. Usually, however, just like an actual pair of lazy-tongs, the respective sections of the truss all deploy simultaneously, ie. so that at any point in time, all the sections are at the same stage of deployment. As a result, the structure becomes relatively long before any of its sections achieve a configuration such that the section is able to withstand the forces which may come into play when the structure reaches that length, ie. the structure is alright when it is stowed and when it is fully deployed but, which it is moving between them, it is comparatively weak and vulnerable.

Sequentially deployed truss structures have also been proposed -here, the truss sections are deployed in sequence rather than simultaneously. This alleviates the strength problem but, to date, sequential deployment has involved the use of rather a complex deployment mechanism, for example a series of active actuators distributed along the structure and operable in sequence to corresponding deploy the respective truss sections.

Thus an object of this invention is to provide a deployable frame structure which acts at least somewhat like a sequential deployable structure ie. with the frames becoming sequentially deployed, at least to degree sufficient to give strength, but for which only a relatively simple form of deployment mechanism is necessary.

According to one aspect of the inventions there is provided a deployable frame structure comprising:-

a series of ploygonal frames connected one to another and each made up of a plurality of elongate members hinged one to another for the frame to be deployable from a stowed to an extended configuration; and

mechanical coupling means connected between the frames for constraining the deployment of each frame such that it only becomes deployed through an initial relatively small portion of its full deployment when the next adjacent frame in the series has been deployed through a substantially larger initial portion of its full deployment.

The structure may of course be retractable from its extended configuration back to its stowed configuration.

According to a second aspect of the present invention, there is provided a method of controlling the deployment and retraction of hinged trusses, wherein the relative movement of the hinges of each truss section is linked to the relative hinge movement of another section, eg the adjacent section, the linking of the relative movement being accomplished by the use of flexible cord, cable, fibre, filament, strip or chain, for example.

The flexible link element may be arranged for sliding over the hinge or rolling over a pulley at the hinge, or for combined rolling and sliding at or near the hinges. This local deployment control gives the trusses inherent sequential deployment and retraction characteristics. In examples of the invention to be described herein, it also causes the trusses to deploy in a way which follows the final shape of the structure. For instance, during deployment, a deployable tower which is straight when deployed, remains approximately straight in the deploying region, and is completely straight in the fully deployed and fulled stowed region.

Trusses controlled by this method can be deployed to form flat curved or twisted surfaces or a combination of flat curved and twisted surface.

For a better understanding of the invention, reference will be made, by way of example, to the accompanying drawings, in which:-

Figure 1 is a diagram for explaining the application of pre-loading forces to deployable truss structures according to the invention;

Figures 2, 3 and 4 are diagrammatic views of respective embodiments of deployable truss structures according to the invention;

Figure 5 is a diagram showing how the sections of a truss structure like those of figures 2 to 4 become deployed,

Figure 6 is a diagram showing the deployed configuration of one section of another type of truss structure according to the invention;

Figures 7 and 8 are diagrammatic views of respective deployable truss structures in which each section has the configuration shown in figure 6;

Figure 9 is a diagram illustrating how elongate flexible deployment control members in the figure 8 structure may be deployed around staggered roller members;

Figure 10 is another diagram for explaining the application of pre-loading forces to deployable truss structures;

Figure 11 is two geometric diagrams for explaining the operation of truss structures like those of figures 7 and 8;

Figure 12 is an evaluation and a sectional side-view of a dish structure made up of deployable truss structures;

Figure 13 is a diagrammatic view of part of a mechanism for controlling the deployment of the figure 12 structure;

Figures 14 and 15 are two views of a model of a deployable tower, and

Figure 16 is a view of a model demonstrating the use of sliding joints in the tower of figures 14 and 15.

The deployment force for extending a truss structure according to the invention can be provided by using one or more overall length control elements such as a spring steel rod. The rod applies a tensile force to the truss to deploy it and a compressive force on the truss to retract it. The rod being in compression when the structure is being deployed and tension when it is being retracted. Alternatively, the truss can be powered out using springs distributed along the truss, the overall length control being provided by using a tension only member which is in tension during deployment and retraction. This flexible tension member being wound out during deployment then acts as a brake on the overall deployment of the truss.

For trusses which curve through a large angle it will be necessary to wind the overall length control element out from both ends so as to reduce the friction build up since the overall length control element has to be guided along the curved truss.

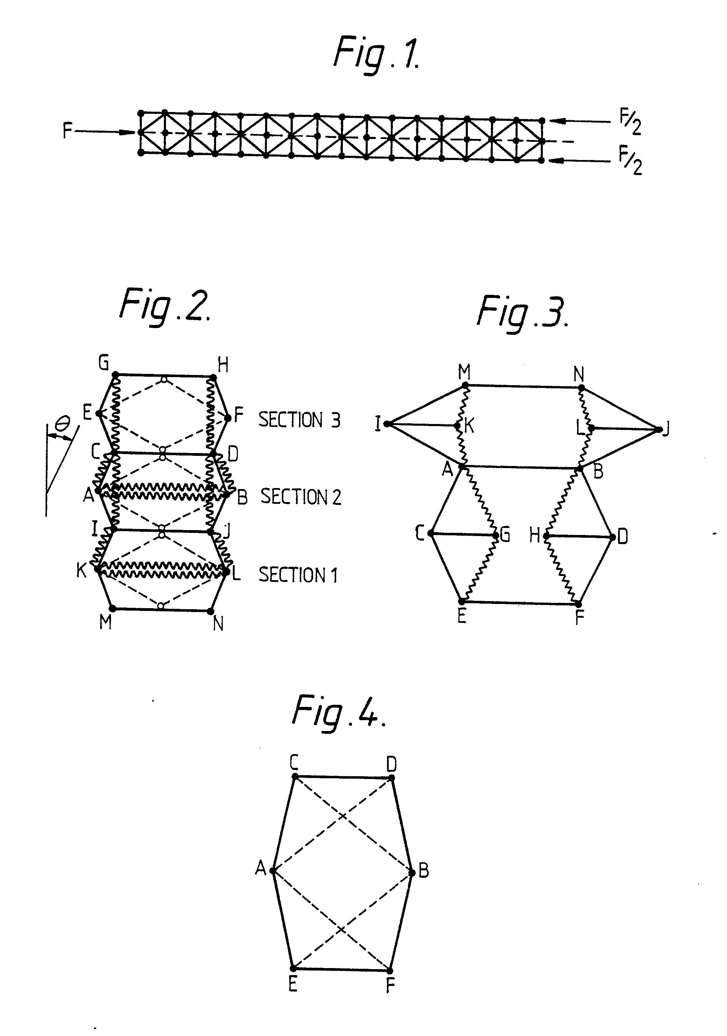

The overall length control element can also be used to control backlash by providing a pre-loading force to the hinges, see Figure 1.

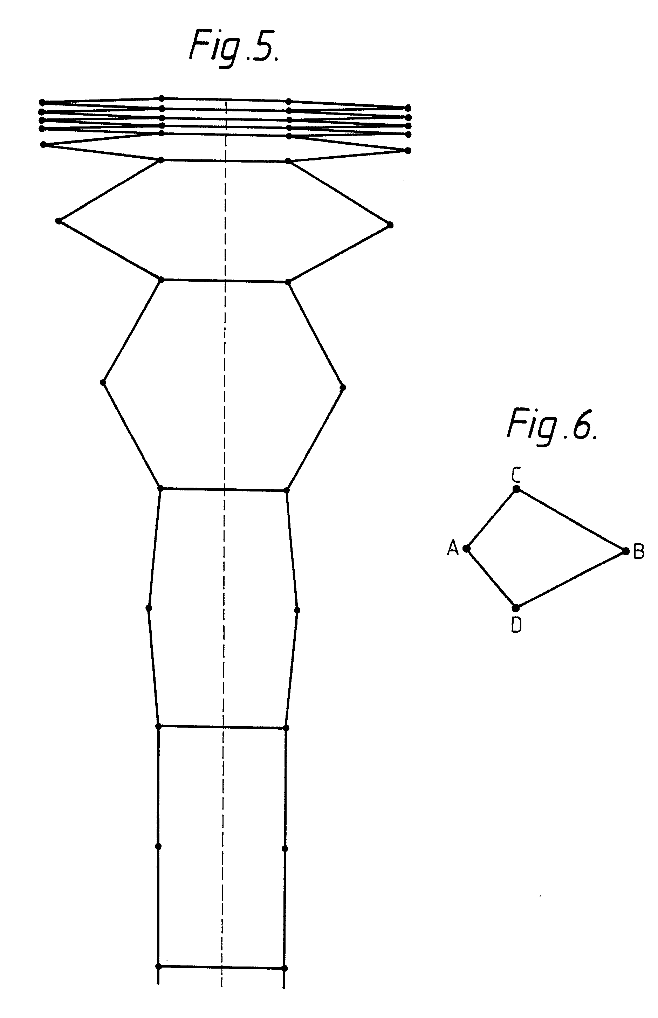

This method of deployment and retraction control can be used with either, truss Type A with 4 rigid hinged links per section, as shown by Figure 6 or truss Type B with 6 rigid hinged links per section, as shown by Figure 2.

Referring to figure 2, for trusses which are straight or nearly straight when deployed, the angle $\theta$, will normally be very small and the narrowing of one section will normally be linked to the height increase of the next section in the ratio 1:1. For the example shown in Figure 2, the dimensions GC and HD of section 3 are linked to the dimension AB of section 2. This is accomplished by 2 flexible elements HDBA and GCAB. As well, the opening and closing of Section 2 is linked to the opening and closing of Section 1. This is accomplished by another 2 flexible control elements CIKL and DJLK. CIKL links dimension CI to dimension KL and DJLK link dimension DJ to dimension KL.

An alternative to figure 2 is shown in figure 3. This again has six rigid links per section and also, for each section, two outriggers IK and LJ or CG and HD, which touch in the middle when the section is fully deployed. The ends of the outriggers, points G and H say, are then held together by control links MACD and NBDC (not shown).

The in-plane shear stiffness of the truss will then be provided by the 4 diagonal elastic elements AG, GE, BH and HF.

A second alternative 6 rigid link truss to that shown in Figure 2 is shown in Figure 4. The configuration of the rigid link elements and the local control elements is the same as for the two other 6 rigid link trusses. The position of the 4 telescoping and/or sliding members is changed from the first 6 rigid link truss. This has been done to keep all the 6 and/or sliding elements hinges at the same position as all 6 rigid link element hinges A, B, C, D, E and F.

Figure 5 shows 9 sections of 6 rigid links per section. The rigid link elements are shown in the positions they would adopt when controlled by 1:1 section to section control elements. The figure illustrates the inherently sequential nature of the deployment and retraction of this type of truss when it is controlled by this method. The overall length control element is shown as a dotted line running along the centre of the truss. The figure illustrates the way a 6 rigid link per section truss which is straight when deployed, deploys with an exactly straight line motion. Whereas the 4 rigid link per section truss which is straight when deployed, has a motion which is only approximately a straight line.

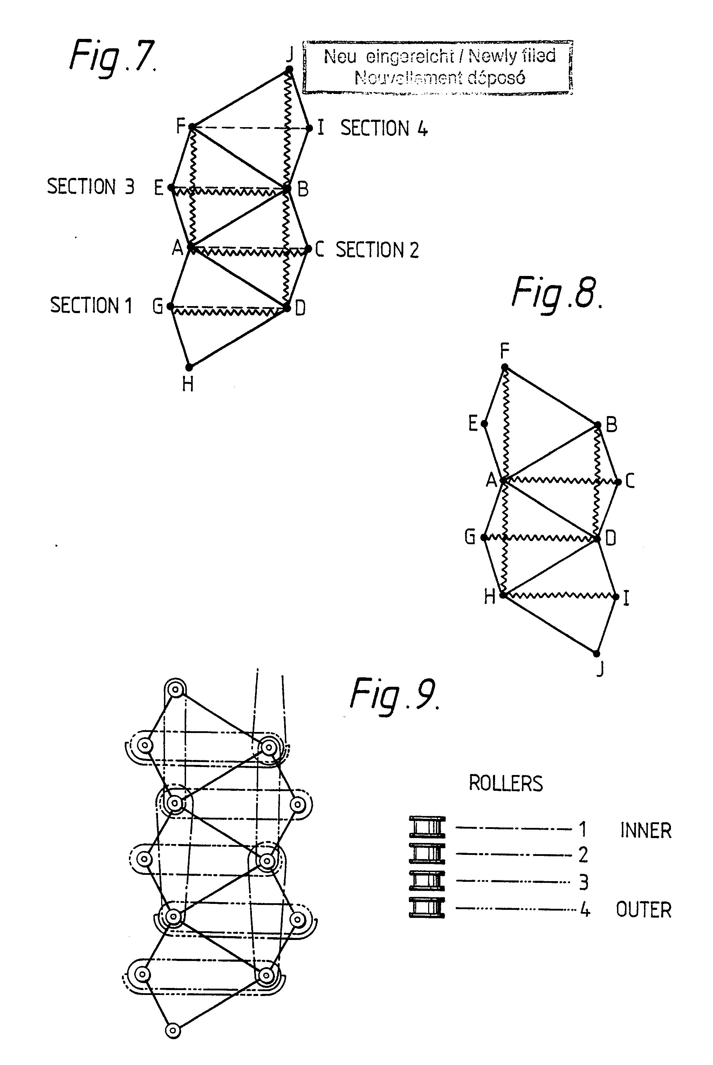

The Type A truss consists of 4 rigid links and 4 hinges per section. As with type B trusses sections can be joined together by sharing hinges and/or members to form different overall truss geometries. The example shown in Figure 7 is a deployable and retractable straight planar truss consisting of 4 sections. The sections are stacked alternately and the middle 2 sections each share 2 rigid elements with their adjacent opposite hand sections. The basic section is shown in Figure 6.

In Figure 7 the dimension GD of Section 1 is linked to the dimension DB of Section 2. Dimension CA of Section 2 is in turn linked to dimension AF of Section 3. Dimension EB of Section 3 is linked to dimension BJ of Section 4. In this way very section apart from the end 2 sections is linked to 2 adjacent sections. Because of the geometry of the above planar truss in Figure 7 the narrowing of one section cannot be linked to the height increase of the section above it, in the ratio 1:1 or in the ratio 2:1 but by varying the ratio of the diagonal members to the side members and by adjusting the side member offsets, any ratio of the form (N + 1) : N can be used where N is a positive integer greater than 1. For reasons of complexity and friction build up, the ratios using lower values of N are more practical.

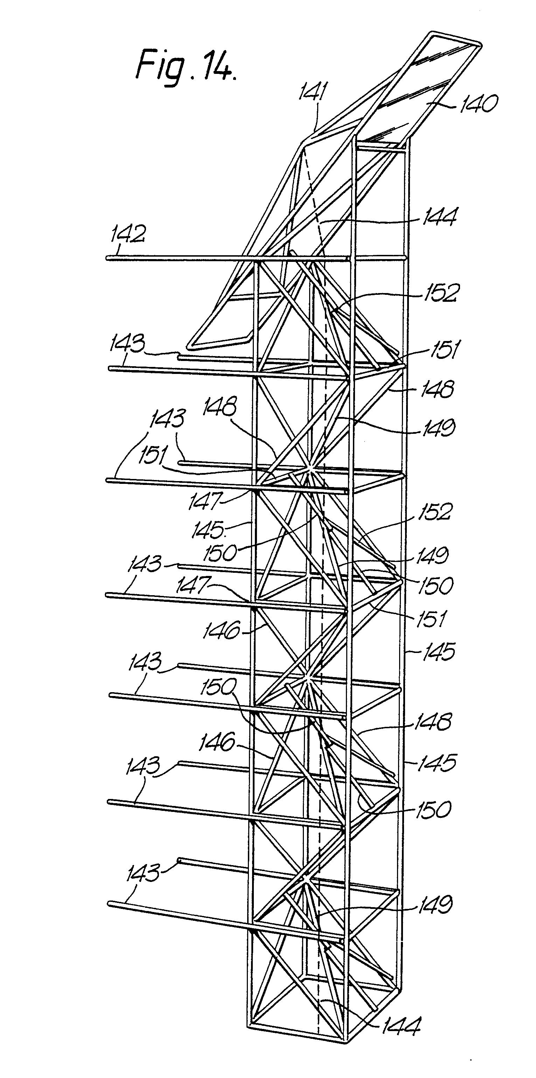

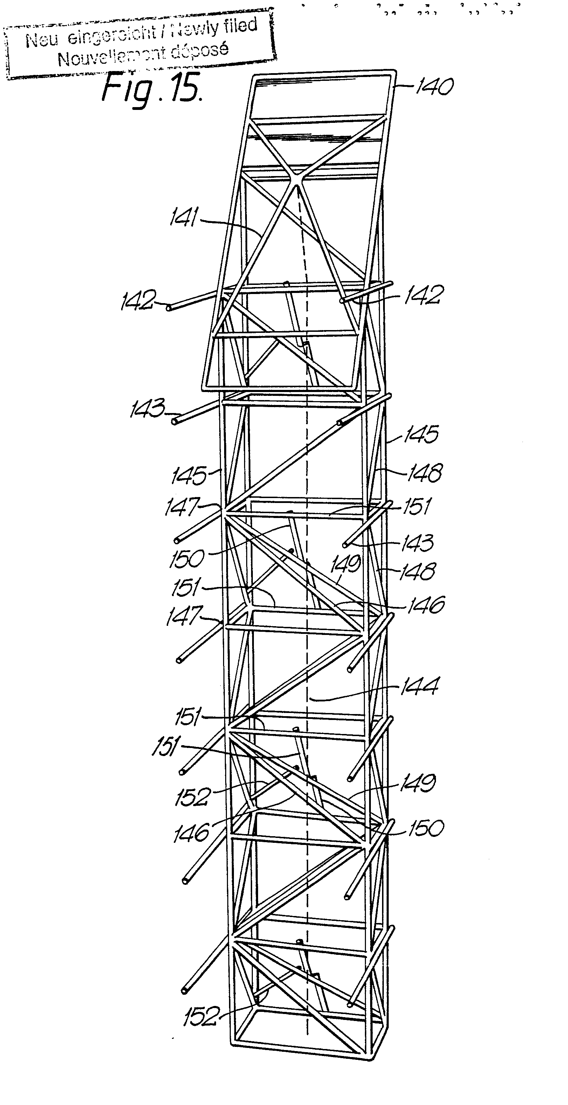

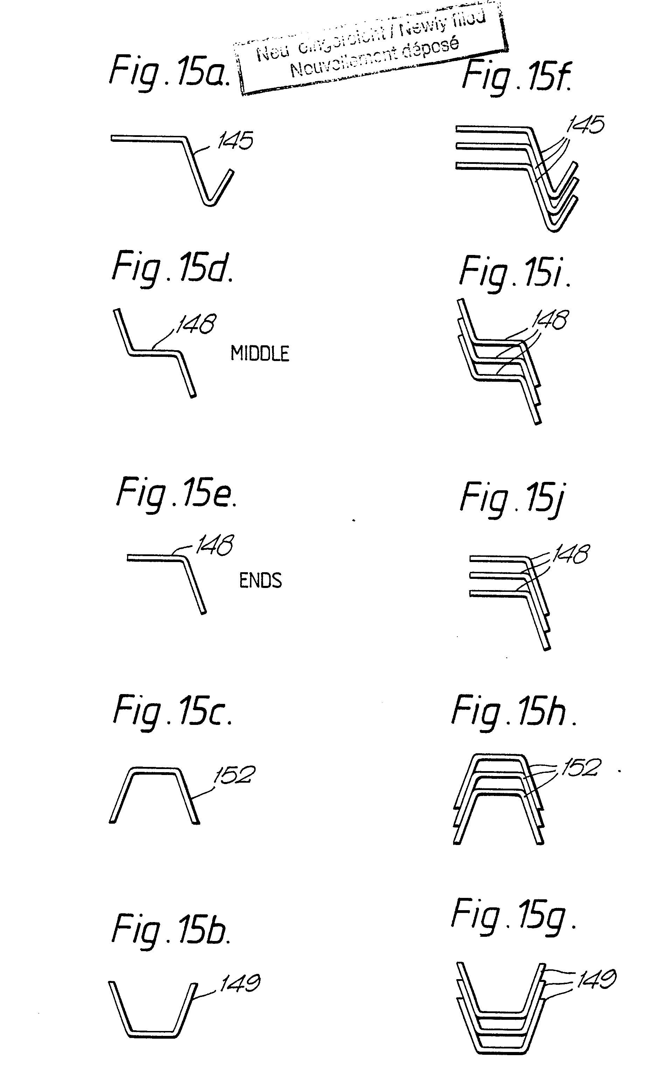

The attached figures 14 and 15 show a model of a deployable tower using 2 planar trusses of the type shown in Figure 7. Figure 15 also shows preferred cross-sectional shapes for the members of the tower giving a low stowed height of the tower. The 2 planar trusses are joined together by rigid elements, to form a 3 dimensional spaceframe. Each 3 dimensional section of the tower forms a diamond shaped prism when deployed. Note that for structural efficiency one of the internal angles of the diamond is almost 180° and the diamond shaped prism is almost a triangular prism. One face of the tower is free from triangulations so that membrane tension solar array panels can be mounted in the triangulation free frames.

The narrowing (unfolding) of each section of the Tower, apart from the uppermost section is linked to the height increase of a section above it in the ratio 3:2.

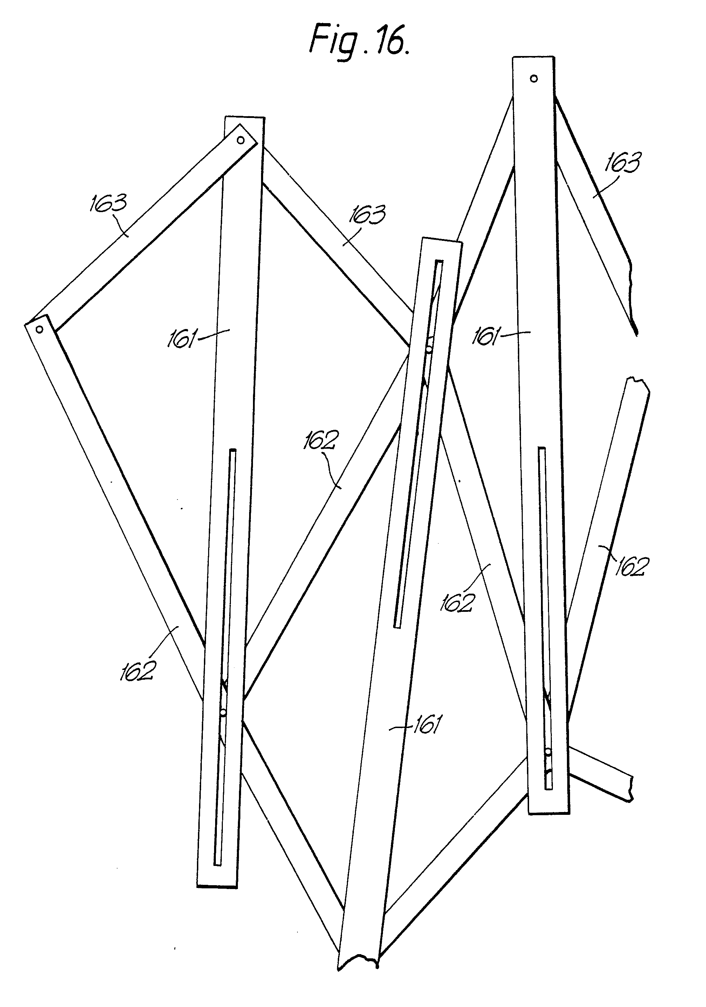

Figure 16 shows a model demonstration how a series of slider members 161 move with respect to side diagonal elements 162 and longitudinal elements 163 making up the truss sections of figures 14 and 15. In figure 16, the slider members 161 are shown as slotted flat strips and the elements 162 and 163 are also strips - the figure is only intended to show how the items move relative one to another. The members and elements preferably have shapes as shown in figures 14 and 15. Also in figures 14 and 15 as well as figure 16, the elongate flexible deployment control elements are not shown.

The way in which the flexible local control elements work is shown in figure 8. Dimension HI is linked to AH by the flexible element HAHIHI. This flexible element is attached at H, runs up over A, back down round H, changes plane on its way to I, goes round I, back to H, round H, changes plane on its way to I, and is attached at I. Dimension GD is linked in the same way by the flexible local control element DBDGDG and AC to AF by element AFACAC. Note however, that the planes that the flexible local control elements use must be staggered in such a way that they do not interfere with each other when stowed, deploying, deployed or retracting. An example of local control element staggering is shown in Figure 9. A linkage like this runs down each side of the tower, controlling the deployment and retraction of individual sections and making the deployment and retraction of the whole tower sequential. This tower would be particularly useful in space, due to the near linear deployment and retraction motion, the sequential nature of deployment and retraction, its low stowed to deployed volume ratio, and its high stiffness and strength to mass ratio. Other possible uses of the tower are:

1. For deploying equipment clear of spacecraft.

2. Ground, sea and space base deployable radio and radar aerials.

3. Erectable crane gibs.

4. Deployable bridge structures.

5. Deployable and retractable manipulation arms or sensor arms. (e.g. for use in radiation areas or for undersea exploration purposes, or the maintenance or building of undersea equipment)

By adjusting the lengths of members curved surfaces can also be generated uses of these are:

A. Ground, sea and space based deployable electromagnetic and acoustic receiver and transmitter antennae.

B. Deployable bridge structures.

C. Deployable concentrators and reflectors for space or ground based solar power generation.

D. Deployable and retractable manipulator arms or sensor arms for undersea exploration purposes, or for the maintenance or construction or undersea equipment, or for use in a radiation hazard zone.

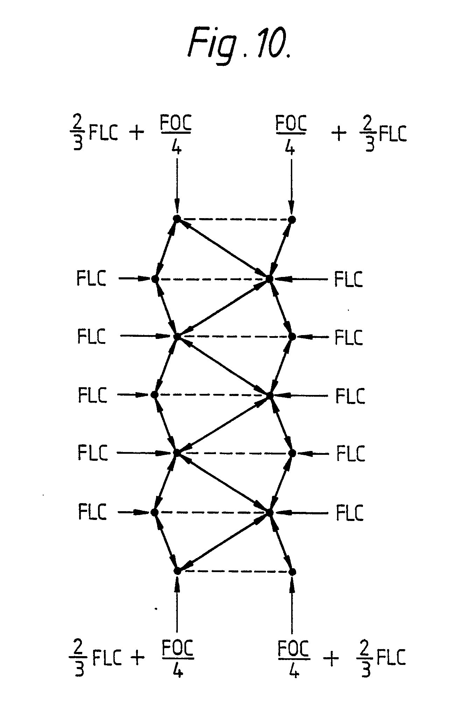

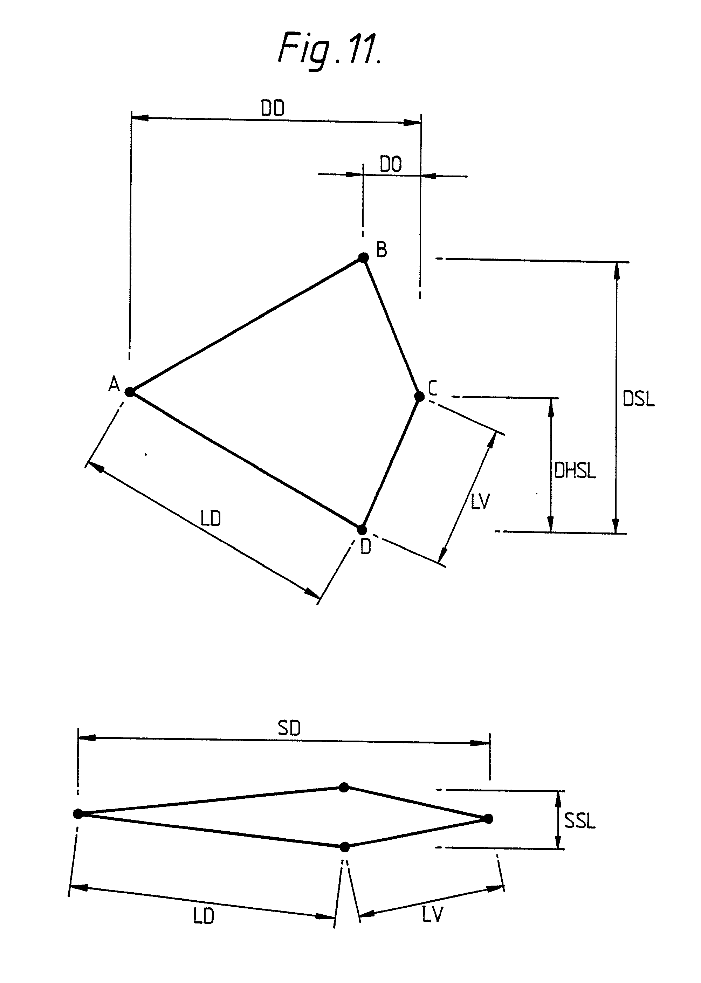

Figure 10 shows how each truss structure making up the tower of figures 14 and 15 (or a curved variant thereof) could be pre-loaded so as to eliminate or at least control backlash. In figure 11, the following notation is used:-

DD = Deployed Depth
LV = Length of Vertical
LD = Length of Diagonal
DMSL = Deployed Half Span Length
DSL = Deployed Span Length
DO = Deployed Offset
SS = Stowed Span Length
SD = Stowed Depth
For SS $\ll$ LD and SS $\ll$ LV
SD = LD + LV
(N + 1) (SD - DD) = (DSL - SS)

N = Number of vertical hinge links where N may be any number greater than one. For the model shown, N = 2.

For stacking purposes:

(AB + AC) must be equal to (AD + DC), however AB may be a different length from AD as long as BC is a different length from DC.

Also (EA + AB) must be equal to (EF + FB).

POSSIBLE <u>USES FOR TYPE A AND B DEPLOYA</u>-BLE <u>AND/OR RETRACTABLE TRUSSES</u>

1. Solar arrays for space and ground use.

2. Solar collectors for space and ground use.

3. Deployable and retractable bridges.

4. Deployable and retractable observation towers.

5. Deployable and retractable crane structures.

6. Extendable rescue platforms.

7. Deployable and retractable manipulator arms or sensor arms for undersea exploration, space exploration, or radiation hazard zones, or for the maintenance or construction of equipment in space, on land, or under the sea.

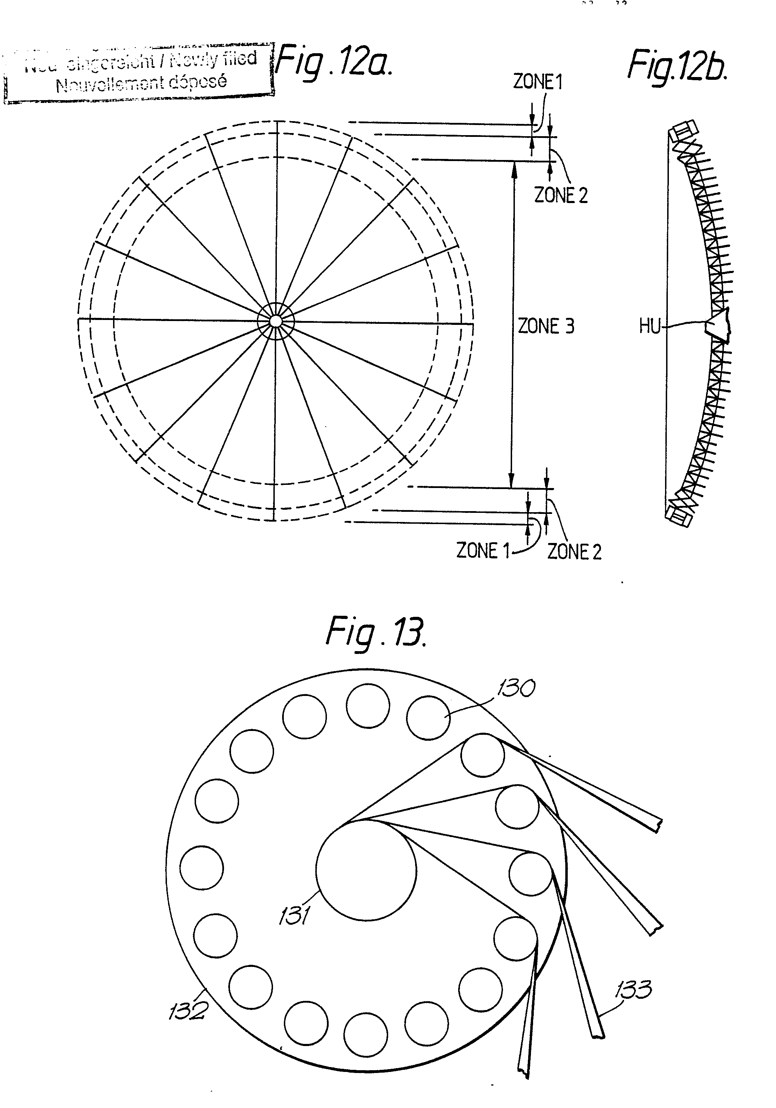

8. Deployable dishes for concentrating or reflecting electromagnetic radiation; see the example shown in Figure 12.

The dish is shown partially deployed. It uses 16 type A deployable and retractable trusses. In zone 1 the trusses are fully stowed, in zone 2 they are partially deployed and in zone 3 they are fully deployed.

The overall length control for each of the 16 trusses can be linked by winding them onto the same drum as shown in Figure 13.

The number of radial trusses and the sizes of the winding mechanism, trusses and the hub may be changed to suit user requirements and operating environment. Such a dish could also be made by deploying type B trusses out radially from the hub of the dish. The reflective surface being attached to the radial trusses.

In drawing Figure 1, the overall length control element is shown dashed, and is in tension. It applies compression to the structure; this preloads the joints which have to take overall truss axial and bending loads.

In Figures 2, 3, 4, 6, 7, 8, 9

dotted lines show telescopic and/or sliding elements.

wavy lines show flexible elements which provide local dimensional control.

continuous lines show rigid elements.

filled in dots indicate hinges (axis perpendicular to paper).

circles show hinges for variable length member only.

In Figure 8, sliding or telescoping elements EB, AC, GD and HI have been omitted for clarity.

In Figure 5 the diagonals and flexible control elements have been omitted. Only rigid links and overall length control element are shown.

In Figure 9, dash single dot lines indicate lines around an innermost roller, dash double dot lines are entrained around a next outer roller and so on through dash treble dot and dash quadruple dot (the latter implying elements entrained around outermost roller).

In Figure 10, FLC = Force Local Control and FOC = Force Overall Control.

In Figure 13,

130 = Preloader wheel idler pulley

131 = Winding drum

132 = Overall length control element preloader wheel

133 = Overall length control element (going to one of the 16 trusses twisted through 90° before reaching the truss).

In Figure 14 and 15,

140 = Solar Array Compressor Panel (could be made of a honeycomb structure with woven glass reinforced plastics faceskins).

141 = Tower compression frame

142 = Upper slider tubes with long helical compression spring (not shown) for final section lock out.

143 = Slider tubes, each with a short helical compression spring (not shown) at end to prevent snap-shut.

144 = Overall length control element (stainless steel strip).

145 = Longitudinal elements

146 = Rear face diagonal element

147 = Position of slider tube end stop (not shown)

148 = Side diagonal element

149 = Internal diagonal element

150 = Torque rod - transmits torque from torsion tube 151 to internal diagonal element 149

151 = Torsion tube (titanium alloy)

152 = Stabiliser strut for internal diagonal 149

Slider tubes 142 and 143 consist of two tubes nested telescopically one within the other, narrower tube extending out from longitudinals and wider tube between longitudinals and side diagonals.

Figures 15a, 15b, 15c, 15d and 15e show the cross sectional shape of the longitudinal elements 145, the internal diagonals, the internal diagonal stabilisers 152, and the middle part and the end part of the side diagonals respectively. Figures 15f, 15g, 15h, 15i and 15j show how the respective elements nest onw in another when the tower is stowed.

A frame structure like that shown in Figures 7 and 8 could have one section turned round left to right to produce a structure which, when deployed, has a bend therein. Turning two sections, adjacent or spaced, produces a structure with a 180° bend or return. Angles and bends in the structure can also be produced by changing the lengths of the elements making up one or more sections.

## Claims

1. A deployable frame structure comprising:-

a series of ploygonal frames connected one to another and each made up of a plurality of elongate members hinged one to another for the frame to be deployable from a stowed to an extended configuration; and

mechanical coupling means connected between the frames for constraining the deployment of each frame such that it only becomes deployed through an initial relatively small portion of its full deployment when the next adjacent frame in the series has been deployed through a substantially larger initial portion of its full deployment.

2. A deployable frame structure according to claim 1, wherein said coupling means comprises, for each two adjacent frames, an elongate flexible member fixed to respective relatively moveable parts of the two frames for constraining a substantial initial portion of the deployment of one frame to be at a rate substantially less than the rate of a like initial portion of the deployment of the other frame.

3. A deployable frame structure according to claim 2, wherein each frame has first and second dimensions in directions transverse to one another, the first dimension increasing with deployment of the frame and the second decreasing such that the ratio of the decrease of the second dimension divided by the increase in the first is relatively small while the frame is near its stowed configuration and increases as the frame is deployed, said elongate element extending from said one frame to and then across the other so as to link the increase in the first dimension of said one frame to the decrease in the second dimension of the other.

4. A deployable frame structure according to claim 3, wherein the elongate element constrains the increase in the first dimension of said one frame to equal the decrease in the second dimension of the other.

5. A deployable frame structure according to claim 3, wherein the elongate element extends back alongside itself via a frame portion over which it moves in the direction of its length so as to render the increase in the first dimension of said one frame to be different to the decrease in the second dimension of the other frame.

6. A deployable frame structure according to any preceding claim, including further elongate members connected to the frames for causing them, when deployed, to become rigidised truss sections.

7. A deployable frame structure according to any preceding claim including resilient means connected to the frames for urging each of them to deploy to its extended configuration.

8. A deployable frame structure according to claim 7, wherein said resilient means comprises a plurality of torsion elements coupled to respective ones of the frames.

9. A deployable frame structure substantially as hereinbefore described with reference to the accompanying drawings.

10. A deployable and retractable, three-dimensional space-frame which is elongate when deployed and which comprises two frame structures according to any preceding claim interconnected in spaced, aligned relationship by a plurality of cross-connection members.

11. A deployable and retractable structure comprising a plurality of frame structures according to any preceding claim all cantilevered to a central support for the frame structures to be deployed in respective radial directions out from a central axis.

# Fig.1.

F →    → F/2
       → F/2

# Fig.2.

SECTION 3

SECTION 2

SECTION 1

θ

# Fig.3.

# Fig.4.

# Fig.5.

# Fig.6.

0 284 688

Fig.7.

Neu eingereicht / Newly filed
Nouvellement déposé

SECTION 4
SECTION 3
SECTION 2
SECTION 1

Fig.8.

Fig.9.

ROLLERS

1 — INNER
2
3
4 — OUTER

# Fig. 10.

$$\frac{2}{3}FLC + \frac{FOC}{4} \qquad \frac{FOC}{4} + \frac{2}{3}FLC$$

FLC

FLC

FLC

FLC

FLC

$$\frac{2}{3}FLC + \frac{FOC}{4} \qquad \frac{FOC}{4} + \frac{2}{3}FLC$$

## Fig.11.

**Fig.12a.**

**Fig.12b.**

ZONE 1

ZONE 2

ZONE 3

ZONE 1  ZONE 2

HU

**Fig.13.**

130

131

132

133

Fig.14.

0 284 688

Fig. 15.

0 284 688

Fig. 15a.

145

Fig. 15f.

145

Fig. 15d.

148

MIDDLE

Fig. 15i.

148

Fig. 15e.

148

ENDS

Fig. 15j

148

Fig. 15c.

152

Fig. 15h.

152

Fig. 15b.

149

Fig. 15g.

149

# Fig .16.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 599 832 (BENTON) * Abstract * | 1 | B 64 G 9/00 |
| A | GB-A-2 104 610 (BRITISH AEROSPACE) * Abstract * | 1 | |
| A | FR-A-2 114 886 (CREATIVE ENGINEERING LTD) * Page 4, line 32 - page 5, line 9 * | 1 | |
| A | WO-A-8 502 434 (ASTRO RESEARCH CORP.) * Abstract * | 1 | |

TECHNICAL FIELDS SEARCHED (Int. Cl.4)

B 64 G
F 04 H
F 16 M
H 01 Q

The present search report has been drawn up for all claims

| Place of search | Date of completion of the search | Examiner |
|---|---|---|
| THE HAGUE | 18-02-1988 | HAUGLUSTAINE H.P.M. |

EPO FORM 1503 03.82 (P0401)